(19) Europäisches Patentamt / European Patent Office / Office européen des brevets

(11) **EP 1 703 628 B1**

(12) **FASCICULE DE BREVET EUROPEEN**

(45) Date de publication et mention
de la délivrance du brevet:
**17.04.2013 Bulletin 2013/16**

(51) Int Cl.:
***H02P 21/10*** *(2006.01)*

(21) Numéro de dépôt: **06110400.6**

(22) Date de dépôt: **24.02.2006**

(54) **Procédé et système pour la commande d'un moteur électrique en cas de défluxage**

Verfahren und Vorrichtung zum Regeln eines elektrischen Motors bei Rotorflussabfall

Method and system for controlling an electric motor in the event of flux reduction

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **15.03.2005 FR 0550661**

(43) Date de publication de la demande:
**20.09.2006 Bulletin 2006/38**

(73) Titulaire: **Schneider Toshiba Inverter Europe SAS
27120 Pacy sur Eure (FR)**

(72) Inventeurs:
• **Jadot, Fabrice
27120 Pacy sur Eure (FR)**
• **Malrait, François
27120 Jouy sur Eure (FR)**
• **Rouchon, Pierre
92190 Meudon (FR)**
• **Sepulchre, Rodolphe
4122 Neufré (BE)**

(74) Mandataire: **Bié, Nicolas et al
Schneider Electric Industries SAS
Service Propriété Industrielle
35 rue Joseph Monier - CS 30323
92506 Rueil-Malmaison Cedex (FR)**

(56) Documents cités:
EP-A- 0 419 761    EP-A- 1 480 330
US-A- 4 677 360    US-A- 5 204 607
US-A1- 2004 135 533

**Description**

La présente invention se rapporte à un procédé et un système de correction de références mis en oeuvre dans un variateur de vitesse pour la commande d'un moteur électrique à alimentation triphasée, par exemple de type synchrone ou asynchrone. L'invention est mise en oeuvre dans un schéma de commande vectorielle classique indifféremment en boucle ouverte sans retour d'une mesure de vitesse ou en boucle fermée avec retour d'une mesure de vitesse.

Dans un schéma de commande vectorielle classique en boucle ouverte, il est connu d'appliquer en entrée une référence de vitesse (ou fréquence) et une référence de flux à appliquer au moteur. En fonction de ces deux données et de mesures de courant sur les différentes phases du moteur, on détermine le courant de flux de référence et le courant de couple de référence. A partir de ces deux courants, on calcule à partir des équations du modèle du moteur, les tensions de commande à appliquer au moteur. De manière connue, ces tensions sont appliquées au moteur en utilisant un onduleur de tension usuel commandé en Modulation de Largeur d'Impulsions dit onduleur MLI. Un tel onduleur MLI délivre au moteur une suite d'impulsions d'amplitude fixe, positive ou négative et modulées en largeur, selon une loi de commande en tension.

Dans ce schéma de commande vectorielle, il est connu que lorsque l'on impose en entrée une référence de vitesse supérieure à la vitesse nominale du moteur et une référence de flux constante, la tension calculée en fonction de ces références peut être incompatible avec la tension disponible sur le réseau ou avec une limitation de tension choisie pour le moteur à alimenter. Dans une telle situation, il est difficile de maintenir le flux à une valeur constante ce qui provoque des instabilités telles que des oscillations de courant, de vitesse ou de couple sur le moteur. Cette région d'instabilité est appelée région défluxée.

Ce problème a été abordé dans le brevet US 5,204,607 qui propose de corriger le flux de référence lorsque la tension de référence déterminée devient supérieure à la tension que peut fournir l'onduleur. Pour cela, le système effectue une comparaison entre la tension de référence et la tension maximale que peut fournir l'onduleur. La différence calculée est utilisée pour déterminer une valeur de correction à appliquer au flux de référence. Le flux de référence est corrigé tant que la tension de référence pour l'onduleur est inférieure ou égale à la tension maximale que peut fournir l'onduleur. Ainsi la référence de flux et le flux réel sont toujours en accord ce qui évite le défluxage.

Cependant dans ce système, les références de courant ne sont pas corrigées dynamiquement ce qui ne permet pas de lui garantir les mêmes propriétés de stabilité dans la zone de limitation de tension et en dehors de cette zone.

Le but de l'invention est donc de proposer un procédé et un système de correction de références mis en oeuvre dans un variateur de vitesse pour la commande d'un moteur électrique, permettant de conserver les mêmes propriétés de stabilité de la commande du moteur aussi bien dans la région défluxée (en limitation de tension) qu'en dehors de celle-ci (hors limitation de tension).

L'invention consiste pour cela à effectuer une correction dynamique des références de flux et de courants appliquées en entrée de la loi de commande du variateur de vitesse.

L'invention concerne plus particulièrement un procédé pour la commande d'un moteur électrique à alimentation triphasée, mis en oeuvre dans un variateur de vitesse fonctionnant selon une loi de commande dans laquelle des références de flux et de courants sont utilisées pour calculer une tension de référence à appliquer au moteur, ledit procédé étant caractérisé en ce qu'il consiste à déterminer des valeurs de correction aux références de flux et de courants lorsque la tension de référence calculée a une valeur supérieure à une valeur limite, à appliquer ces valeurs de correction aux références de flux et de courants, et en ce que les valeurs de correction des références de flux et de courants sont calculées par un système dynamique représentant un modèle du moteur à commander, doté d'intégrateurs et ayant pour entrée l'écart entre un vecteur tension de commande limité à appliquer au moteur et la tension de référence calculée.

Au contraire de l'art antérieur, le procédé de l'invention permet de corriger dynamiquement à la fois le flux de référence et les courants de référence ce qui permet de disposer d'un système de régulation complet ayant une dimension égale à celle du modèle du moteur commandé.

Selon une particularité de ce procédé, si la tension de référence calculée a une valeur supérieure à la valeur limite, la tension de commande à appliquer au moteur est égale à la valeur limite.

L'invention concerne également un système de commande utilisé dans un variateur de vitesse pour moteur électrique à alimentation triphasée, ledit système comprenant des moyens pour calculer une tension de référence à appliquer au moteur en fonction notamment de références de flux et de courants, ledit système étant caractérisé en ce qu'il comporte des moyens pour déterminer des valeurs de correction aux références de flux et de courants et appliquer ces valeurs de correction aux références de flux et de courants lorsque la tension de référence a une valeur supérieure à une valeur limite, les valeurs de correction étant calculées à l'aide d'un système dynamique représentant un modèle du moteur à commander, doté d'intégrateurs et ayant pour entrée l'écart entre un vecteur tension de commande limité à appliquer au moteur et la tension de référence calculée.

Selon une particularité, ce système comporte également des moyens pour limiter la tension de commande à appliquer au moteur à une valeur égale à la valeur limite lorsque la tension de référence calculée a une valeur supérieure à la valeur limite.

Selon l'invention, en cas de défluxage, afin de conserver les propriétés de stabilité dans la commande du moteur, on effectue donc une correction dynamique des références de flux et de courants tout en respectant le modèle du moteur.

D'autres caractéristiques et avantages vont apparaître dans la description détaillée qui suit en se référant à un mode de réalisation donné à titre d'exemple et représenté par les dessins annexés sur lesquels :

- La figure 1 représente un schéma de commande vectorielle mis en oeuvre dans un variateur de vitesse pour moteur électrique, présentant en partie grisée les étapes constituant l'invention.

- La figure 2 représente schématiquement le fonctionnement du modèle du moteur utilisé dans l'invention pour effectuer une correction dynamique des références de flux et de courants.

Un modèle mathématique conventionnel d'un moteur M peut être exprimé par la relation suivante :

$$\frac{d}{dt}\begin{bmatrix} id \\ iq \\ \varphi r \end{bmatrix} = A\begin{bmatrix} id \\ iq \\ \varphi r \end{bmatrix} + B\begin{bmatrix} Vd \\ Vq \\ 0 \end{bmatrix} \quad (1)$$

Dans laquelle $id$ représente le courant de flux du stator, $iq$ représente le courant de couple du moteur, $\varphi r$ représente le flux rotor et $Vd$ et $Vq$ les tensions de commande appliquées au moteur. A et B représentent des matrices dont les valeurs sont calculées à partir des paramètres du moteur et de la vitesse du rotor. Des informations complémentaires sur cette relation sont disponibles dans le brevet US 6,281,659.

Cette relation (1) peut être écrite de la manière suivante :

$$\frac{d}{dt}[x] = Ax + Bu \quad (2)$$

Dans laquelle $x$ définit l'état du système à commander et correspond au courant délivré au moteur et au flux rotor et $u$ représente la tension de commande appliquée au moteur.

L'objectif de contrôle du moteur est de créer une commande de tension $u$ pour réguler l'état $x$ du système à une référence $x_{ref}$ définie par la relation (3) ci-dessous.

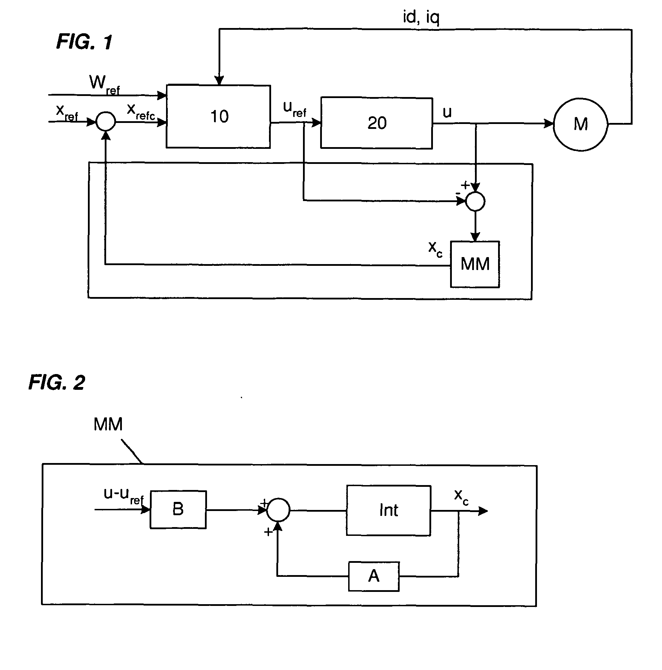

D'après la figure 1, à partir du modèle mathématique du moteur M défini par la relation (2) ci-dessus, les références de flux et de courants, définies par $x_{ref}$, appliquées en entrée, peuvent être définies par :

$$\frac{d}{dt}[x_{ref}] = Ax_{ref} + Bu_{ref} + C \quad (3)$$

dans laquelle $U_{ref}$ est une tension de commande de référence calculée à partir de la référence de vitesse $W_{ref}$ et des références de flux et de courants $x_{ref}$ et destinée à être appliquée au moteur M et $C$ représente un terme de régulation de $x$. On en déduit que la tension de référence $U_{ref}$, calculée (10, figure 1) à partir des équations du modèle du moteur, est définie par la relation (4) suivante :

$$Bu_{ref} = \frac{d}{dt}[x_{ref}] - Ax_{ref} - C \quad (4)$$

Si notamment les références de flux et de vitesse imposées en entrée sont incohérentes, la tension de référence calculée $U_{ref}$ peut s'avérer incompatible avec la tension délivrée par le réseau d'alimentation ou avec une tension limite spécifiée pour un fonctionnement normal du moteur M.

Dans une telle situation, si la valeur de la tension de référence $u_{ref}$ est supérieure en module à une valeur limite de tension $U_{lim}$, on utilise un dispositif limiteur de tension (20) permettant de limiter la tension de référence $u_{ref}$ calculée à une valeur $u$ par exemple égale en module à la valeur limite déterminée $u_{lim}$. Cette valeur limite $u_{lim}$ peut correspondre par exemple à la valeur de tension maximale délivrée par le réseau d'alimentation ou à la valeur de tension maximale qu'il est possible d'appliquer au moteur M. La tension réellement appliquée au moteur est donc la tension $u$ de module égal à une valeur $u_{lim}$ et non la tension $u_{ref}$.

La dynamique de l'écart entre l'état du système et les références de flux et de courant $x_{ref}$ est définie par la relation suivante :

$$\frac{d}{dt}\left[x - x_{ref}\right] = A\left[x - x_{ref}\right] + B\left[u - u_{ref}\right] - C \quad (5)$$

Tant que la tension de référence est inférieure à la valeur limite de tension, les valeurs de $u$ et de $U_{ref}$ sont égales. On obtient donc :

$$\frac{d}{dt}\left[x - x_{ref}\right] = A\left[x - x_{ref}\right] - C \quad (6)$$

Cependant, en travaillant en limitation de tension, le terme $U-U_{ref}$ ci-dessus est non nul. On se situe dans la région défluxée dans laquelle il n'est pas possible de maintenir le flux du rotor constant, ce qui peut entraîner des instabilités dans la commande du moteur M. Le terme $u-u_{ref}$ introduit un écart non nul entre les références de flux et de courant $x_{ref}$ et le système (relation (5) ci-dessus). Selon l'invention, ce terme $u-u_{ref}$ n'est donc pas directement transféré sur l'écart $X-X_{ref}$. Il est transmis via un système dynamique défini par la relation (5) ci-dessus possédant des intégrateurs. Cependant, lorsque le système sort de la limitation de tension, le terme $U-U_{ref}$ passe à 0 mais l'écart $x-x_{ref}$ ne redeviendra nul qu'après un temps dépendant des constantes de la matrice A du système.

Afin d'améliorer les performances en dynamique pour des trajectoires entrant et sortant de la limitation de la tension, on effectue une correction dynamique des références de flux et de courants $x_{ref}$ afin de rendre la référence de flux atteignable et de conserver ainsi les propriétés de stabilité de la commande du moteur M en dehors de la zone de limitation de tension et dans la zone de limitation de tension. Le principe de la correction dynamique des références de flux et de courants $x_{ref}$ est de calculer les valeurs de correction $x_c$ de la manière suivante :

$$\frac{d}{dt}\left[x_c\right] = Ax_c + B(u - u_{ref}) \quad (7)$$

Cette relation (7) exprime un modèle du moteur dans lequel $x_c$ est la correction calculée à appliquer aux références de flux et de courants $x_{ref}$, $u$ est la tension de commande limitée appliquée au moteur, $u_{ref}$ est la tension de référence calculée à partir de la référence de vitesse $W_{ref}$ et des références de flux et de courants $x_{ref}$ et définie par exemple par la relation (4) ci-dessus.

L'écart entre la tension de référence calculée $U_{ref}$ et la tension limitée $u$ est injectée directement dans un système d'équation représentant un modèle du moteur. On calcule ainsi, à l'aide d'un système dynamique MM doté d'intégrateurs (Int, figure 2) dont le nombre est égal au nombre d'états du moteur, la valeur de $x_c$ à partir de la relation (7) définie ci-dessus.

La valeur de correction $x_c$ calculée est appliquée directement en entrée aux références de flux et de courants $x_{ref}$ afin de corriger celles-ci. Les références de flux et de courants corrigées $x_{refc}$ sont donc égales à la somme des références de flux et de courants $x_{ref}$ et des valeurs de correction $x_c$ calculées.

Le calcul d'une valeur de correction $x_c$ est effectué tant qu'il existe un écart de tension entre $u$ et $u_{ref}$.

On voit bien dans la relation (7) ci-dessus que, en dehors de la limitation de tension, c'est-à-dire lorsque $u$ et $u_{ref}$ ont des valeurs égales, les valeurs de $x_c$ convergent naturellement vers zéro (suivant la dynamique naturelle du moteur). En revanche, en limitation de tension, l'écart $u-u_{ref}$ est négatif et les valeurs de $x_c$ ont tendance à baisser. Par conséquent, les références de flux et de courants corrigées $x_{refc}$ baissent jusqu'à annuler l'écart de tension entre $u$ et $u_{ref}$.

La valeur des références de flux et de courants corrigées $x_{refc}$ s'exprime par la relation suivante :

$$\frac{d}{dt}\big[x_{refc}\big] = \frac{d}{dt}\big[x_{ref}\big] + \frac{d}{dt}\big[x_c\big] \quad (8)$$

En effectuant ce calcul, on aboutit alors à :

$$\frac{d}{dt}\big[x_{refc}\big] = Ax_{refc} + Bu + C \quad (9)$$

A partir du modèle moteur défini par la relation (2) ci-dessus selon laquelle $\frac{d}{dt}[x] = Ax + Bu$ , on remarque que si la matrice A est stable, la dynamique de l'écart entre l'état du système et les références de flux et de courants corrigées définie par $x\text{-}x_{refc}$ vérifie

$$\frac{d}{dt}\big[x - x_{refc}\big] = A\big[x - x_{refc}\big] - C \quad (11)$$

Cette relation (11) qui gère la dynamique de l'écart entre l'état du système et les références de flux et de courants corrigées $x_{refc}$, quelle que soit la valeur de la tension $u$ a les mêmes propriétés de stabilités dans tout le domaine de fonctionnement que l'écart $x\text{-}x_{ref}$ qui gère la dynamique de l'écart entre l'état du système et les références de flux et de courant en dehors de la limitation de tension. En effet, en dehors de la limitation de tension ($x_c=0$ et $u=u_{ref}$), les relations (2) et (3) donnent l'expression de la dynamique de l'écart $x\text{-}x_{ref}$ égale à :

$$\frac{d}{dt}\big[x - x_{ref}\big] = A\big[x - x_{ref}\big] - C$$

Les propriétés de stabilité du système obtenues dans le domaine hors limitation de tension sont donc bien conservées dans la région défluxée. Les trajectoires entrantes et sortantes de la limitation de tension sont naturellement gérées par la correction dynamique des références de flux et de courant sans modifier les propriétés de stabilité et de suivi de trajectoire du système.

Il est bien entendu que l'on peut, sans sortir du cadre de l'invention, imaginer d'autres variantes et perfectionnements de détail et de même envisager l'emploi de moyens équivalents.

## Revendications

1. Procédé pour la commande d'un moteur électrique (M) à alimentation triphasée, mis en oeuvre dans un variateur de vitesse fonctionnant selon une loi de commande dans laquelle des références de flux et de courants ($x_{ref}$) sont utilisées pour calculer une tension de référence ($u_{ref}$) à appliquer au moteur (M), ledit procédé étant **caractérisé en ce qu'**il consiste à déterminer des valeurs de correction ($x_c$) aux références de flux et de courants ($x_{ref}$) lorsque la tension de référence ($u_{ref}$) calculée a une valeur supérieure à une valeur limite ($u_{lim}$), à appliquer ces valeurs de correction ($x_c$) aux références de flux et de courants ($x_{ref}$), et **en ce que** les valeurs de correction ($x_c$) des références de flux et de courants ($x_{ref}$) sont calculées par un système dynamique (MM) représentant un modèle du moteur (M) à commander, doté d'intégrateurs (Int) et ayant pour entrée l'écart entre un vecteur tension de commande ($u$) limité à appliquer au moteur (M) et la tension de référence ($u_{ref}$) calculée.

**2.** Procédé selon la revendication 1, **caractérisé en ce que**, si la tension de référence ($u_{ref}$) calculée a une valeur supérieure à une valeur limite ($u_{lim}$), le module du vecteur tension de commande ($u$) à appliquer au moteur est égal à la valeur limite ($u_{lim}$).

**3.** Système de commande utilisé dans un variateur de vitesse pour moteur électrique à alimentation triphasée, ledit système comprenant des moyens pour calculer (10) une tension de référence ($u_{ref}$) à appliquer au moteur (M) en fonction notamment de références de flux et de courants ($x_{ref}$), ledit système étant **caractérisé en ce qu'**il comporte des moyens pour déterminer des valeurs de correction ($x_c$) aux références de flux et de courants ($x_{ref}$) et appliquer ces valeurs de correction ($x_c$) aux références de flux et de courants ($x_{ref}$) lorsque la tension de référence ($u_{ref}$) a une valeur supérieure à une valeur limite ($u_{lim}$), les valeurs de correction ($x_c$) étant calculées à l'aide d'un système dynamique (MM) représentant un modèle du moteur à commander, doté d'intégrateurs (Int) et ayant pour entrée l'écart entre un vecteur tension de commande ($u$) limité à appliquer au moteur (M) et la tension de référence ($u_{ref}$) calculée.

**4.** Système selon la revendication 3, **caractérisé en ce qu'**il comporte également des moyens (20) pour limiter le module du vecteur tension de commande ($u$) à appliquer au moteur (M) à une valeur égale à une valeur limite ($u_{lim}$) lorsque la tension de référence ($u_{ref}$) calculée a une valeur supérieure à la valeur limite ($u_{lim}$).

**Claims**

**1.** Method for controlling an electric motor (M) having a three phase supply, used in a variable speed drive functioning according to a control law in which flux and current references ($x_{ref}$) are used for calculating a reference voltage ($u_{ref}$) to be applied to the motor (M), the said method being **characterized in that** it consists in determining correction values ($x_c$) for the flux and current references ($x_{ref}$) when the calculated reference voltage ($u_{ref}$) has a value greater that a limit value($u_{lim}$), in applying these correction values ($x_c$) to the flux and current references ($x_{ref}$), and **in that** the correction values ($x_c$) of the flux and current references ($x_{ref}$) are calculated by a dynamic system (MM) representing a model of the motor (M) to be controlled, provided with integrators (Int) and having as input the difference between a limited value of a control voltage vector ($u$) to be applied to the motor (M) and the calculated value of the reference voltage ($u_{ref}$).

**2.** Method according to Claim 1, **characterized in that**, if the calculated reference voltage ($u_{ref}$) has a value greater than a limit value ($u_{lim}$), the module of the control voltage vector ($u$) to be applied to the motor is equal to the limit value ($u_{lim}$).

**3.** Control system used in a variable speed drive for an electric motor having a three phase supply, the said system comprising means (10) for calculating a reference voltage ($u_{ref}$) to be applied to the motor (M) as a function of flux and current references ($x_{ref}$) in particular, the said system being **characterized in that** it comprises means for determining correction values ($x_c$) for the flux and current references ($x_{ref}$) and applying these correction values ($x_c$) to the flux and currents references ($x_{ref}$) when the reference voltage ($u_{ref}$) has a value greater than a limit value ($u_{lim}$), the correction values ($x_c$) being calculated using a dynamic system (MM) representing a model of the motor to be controlled, provided with integrators (Int) and having as input the difference between a limited value of a control voltage vector ($u$) to be applied to the motor (M) and the calculated value of the reference voltage ($u_{ref}$).

**4.** System according to Claim 3, **characterized in that** it also comprises means (20) for limiting the module of the control voltage vector ($u$) to be applied to the motor (M) to a value equal to a limit value ($u_{lim}$) when the calculated reference voltage ($u_{ref}$) has a value greater than the limit value ($u_{lim}$).

**Patentansprüche**

**1.** Verfahren zum Steuern eines Elektromotors (M) mit Dreiphasenspeisung, der in einem Regelantrieb eingesetzt wird, der gemäß einem Steuergesetz arbeitet, in dem Referenzwerte für Flüsse und Ströme ($x_{ref}$) verwendet werden, um eine Referenzspannung ($u_{ref}$) zu berechnen, die an den Motor (M) anzulegen ist, wobei das Verfahren **dadurch gekennzeichnet ist, dass** es darin besteht, Korrekturwerte ($x_c$) für die Referenzwerte für Flüsse und Ströme ($x_{ref}$) zu bestimmen, wenn die berechnete Referenzspannung ($u_{ref}$) einen Wert besitzt, der größer ist als ein Grenzwert ($u_{lim}$), und diesen Korrekturwert ($x_c$) auf die Referenzwerte für Flüsse und Ströme ($x_{ref}$) anzuwenden, und dass die Korrekturwerte ($x_c$) für die Referenzwerte für Flüsse und Ströme ($x_{ref}$) durch ein dynamisches System (MM) berechnet werden, das ein Modell für den zu steuernden Motor (M) repräsentiert, das mit Integratoren (Int) versehen ist und als Eingang den Abstand zwischen einem begrenzten Steuerspannungsvektor (u), der an den Motor (M) anzulegen ist, und der berechneten Referenzspannung ($u_{ref}$) hat.

2. Verfahren nach Anspruch 1, **dadurch gekennzeichnet, dass** dann, wenn die berechnete Referenzspannung ($u_{ref}$) einen Wert besitzt, der größer ist als ein Grenzwert ($u_{lim}$), der Betrag des Steuerspannungsvektors (u), der an den Motor anzulegen ist, gleich dem Grenzwert ($u_{lim}$) ist.

3. Steuersystem, das in einem Regelantrieb für einen Elektromotor mit Dreiphasenspeisung verwendet wird, wobei das System Mittel (10) zum Berechnen einer Referenzspannung ($u_{ref}$), die an den Motor (M) anzulegen ist, als Funktion insbesondere von Referenzwerten von Fluss und Ströme ($x_{ref}$) umfasst, wobei das System **dadurch gekennzeichnet ist, dass** es Mittel umfasst, um Korrekturwerte ($x_c$) für die Referenzwerte für Flüsse und Ströme ($x_{ref}$) zu bestimmen und diese Korrekturwerte ($x_c$) auf die Referenzwerte für Flüsse und Ströme ($x_{ref}$) anzuwenden, wenn die Referenzspannung ($u_{ref}$) einen Wert hat, der größer ist als ein Grenzwert ($u_{lim}$), wobei die Korrekturwerte ($x_c$) mit Hilfe eines dynamischen Systems (MM) berechnet werden, das ein Modell des zu steuernden Motors repräsentiert und mit Integratoren (Int) versehen ist und als Eingang den Abstand zwischen einem begrenzten Steuerspannungsvektor (u), der an den Motor (M) anzulegen ist, und der berechneten Referenzspannung ($u_{ref}$) hat.

4. System nach Anspruch 3, **dadurch gekennzeichnet, dass** es außerdem Mittel (20) umfasst, um den Betrag des Steuerspannungsvektors (u), der an den Motor (M) anzulegen ist, auf einen Wert zu begrenzen, der gleich einem Grenzwert ($u_{lim}$) ist, wenn die berechnete Referenzspannung ($u_{ref}$) einen Wert besitzt, der größer ist als der Grenzwert ($u_{lim}$).

*FIG. 1*

*FIG. 2*

## RÉFÉRENCES CITÉES DANS LA DESCRIPTION

**Documents brevets cités dans la description**

- US 5204607 A
- US 6281659 B